# EUROPEAN PATENT APPLICATION

(11) **EP 3 048 285 A1**
(43) Date of publication of application: **27.07.2016**
(21) Application number: 15000151.9
(22) Date of filing: 20.01.2015
(51) Int. Cl.: F02D 9/06, F02B 37/02

(54) **Braking Flap and Exhaust Gas System**

(71) Applicant: KNORR-BREMSE Systeme für Nutzfahrzeuge GmbH, 80809 München (DE)
(72) Inventor: Németh, Huba, 1116 Budapest (HU); Juhasz, Arpad, 2461 Tarnok (HU); Györke, Zsombor, 8360 Keszthely (HU)

(57) **Abstract**

A flap (100) for braking a vehicle by controlling a pressure of a flow (105) of exhaust gas from a combustion engine (300) comprises: a first arm portion (110); a second arm portion (120); and a support portion (130). The support portion (130) is arranged between the first arm portion (110) and the second arm portion (120). The support portion (130) is configured to mount the flap (100) rotatable about a rotational axis (135) being tangential in a cross-sectional view of the flow (105) of exhaust gas. The first arm portion (110) and the second arm portion (120) comprise a geometry to balance a pressure acting on the first arm portion (110) with the pressure acting on the second arm portion (120) to limit a maximal torque acting on the flap (100) about the rotational axis (135).

## Description

The present invention relates to a braking flap, an exhaust gas system and, in particular, to a pressure balanced flap upstream of a turbo charger turbine with different functionalities.

### Background

An exhaust brake slows down a vehicle, in particular a commercially used vehicle, by closing the exhaust path from the combustion engine causing the exhaust gas to be compressed in the exhaust manifold, and in the cylinder(s). Since the exhaust gas is being compressed, and if there is no fuel being applied, the engine slows down the vehicle. The amount of negative torque generated is usually directly proportional to the back pressure of the engine.

A conventional exhaust gas system is, for example, described in EP 2 679 787, wherein the exhaust brake is arranged upstream of a turbo charger turbine and is integrated with exhaust gas recirculation (EGR) supply ports. In addition, an exhaust gas pressure sensor is integrated to adjust the EGR flow and the engine mode performance through a control of the exhaust pressure upstream the turbine.

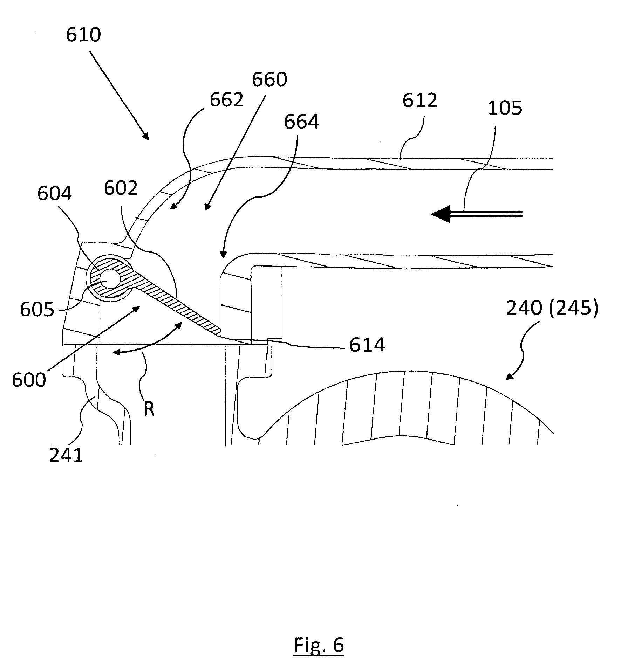

Fig. 6 depicts details of a conventional exhaust gas system with a flap 600 arranged within a tubular structure 610 that guides a flow 105 of exhaust gas towards a turbine 245 of a turbo charger unit 240.

The tubular structure 610 comprises a first straight portion 612, a second straight portion 614 and a curved portion 660 comprising an inner curve 664 and an outer curve 662 with respect to the flow 105 of the exhaust gas. The exhaust gas flows, for example, from a combustion engine (not shown in the Figure) towards the turbo charger 240 with the turbine 245 (only partly shown in Fig. 6). At the curved portion 660 the flap 600 is rotationally attached to a sidewall of the outer curved portion 662 of the tubular structure 610. In the example of Fig. 6 the tubular structure 610 is attached to a connecting part 241 of the turbo charger 240 or the turbine 245. The tubular structure 610 guides the exhaust gas from the engine to the turbine 245.

The flap 600 can be rotated (as shown by the double arrow R) from an open position, wherein the flow 105 can freely flow towards the turbo charger 240 and a closed position (shown in Fig. 6) wherein the flap 600 closes the flow path of the flow 105. Hence, the depicted flap arrangement represents a valve for controlling the flow 105. The flap 600 comprises an arm portion 602 and a support portion 604. The support portion 604 is rotationally attachable to a rotational axis 605 supported by the outer sidewall of the tubular structure 610 in the curved portion 660.

Although this conventional flap 600 is attached to the sidewall of the tubular structure 610 and thus does not disturb the flow 105 in an open position, this flap 600 is exposed to significant pressure when operating the flap 600. In particular, the pressure deteriorates the performance of the exhaust brake actuator, because a large torque has to be applied to close the flap 600. This, in turn, results in a large response time. In addition, this decreases the positioning accuracy of the valve (e.g. if the flap shall be closed only partly) yielding to loss in performance of both a possible EGR and the exhaust brake.

Therefore, there is a demand for a flap, which improves the performance of an exhaust gas system.

### Summary of the Invention

The present invention solves the afore-mentioned problems by providing a flap according to claim 1 and an exhaust gas system according to claim 5. The dependent claims refer to specifically advantageous realizations of the subject matters of the independent claims.

The present invention relates to a flap for braking a vehicle by controlling a pressure of a flow of exhaust gas from a combustion engine. The flap comprises a first arm portion, a second arm portion, and a support portion. The support portion is arranged between the first arm portion and the second arm portion and is configured to mount the flap rotatable about a rotational axis. The rotational axis is tangential to the flow of exhaust gas, when viewed in a cross-sectional view perpendicular to the flow direction. The first arm portion and the second arm portion comprise a geometry to balance a pressure acting on the first arm portion with the pressure acting on the second arm portion to limit a maximal torque acting on the flap about the rotational axis.

Using this arrangement it becomes, for example, possible to ensure that the gas flows only on one side of the flap. In other words, the exhaust gas has not to flow around the flap, thereby preventing unwanted turbulences in the exhaust gas.

The above-mentioned problem is therefore solved by the present invention by defining two arms, which extend along the flow. Since they are rotatably mounted, not in the flow, but at a peripheral portion, they do not interfere with the flow in the open position. Therefore, the flow is not disturbed in the open position.

The defined balancing can be achieved by many different possibilities. For example, the first and second arm portions can be formed to have appropriate lengths so that a leverage effect can provide the balancing. In addition, the first and second arm portions may comprise different surface areas, which are exposed to the flow and, as a result, the first and second arm portions provide different contributions to the overall torque (which differ not only by the sign, but also in the amount of torque). Moreover, the first and second arm portions may be formed such that the flow hits surfaces in different angles resulting again in different contributions to the overall torque. These are only some examples to achieve the desired effect. A person skilled in the art will readily find further arrangements that achieve the same effect.

In another embodiment the first arm portion and/or the second arm portion comprise(s) a curved surface in a direction of the flow to reduce turbulences in the flow of exhaust gas.

In yet another embodiment the first arm portion and/or the second arm portion are arranged such that the first arm portion and/or the second arm portion are part of a wall guiding the flow of exhaust gas. Hence, the flap can at least partly mimic a sidewall of the flow path.

In various applications it may be of advantage that the flap returns to the open position if no torque is applied (defining a default position). Therefore, in a further embodiment the first arm portion and/or the second arm portion comprise(s) a geometry enabling a nonzero opening torque acting on the flap in a closed position.

The present invention relates also to an exhaust gas system for a combustion engine of a vehicle. The exhaust gas system comprises a tubular structure with a sidewall to guide the exhaust gas from the combustion engine and one of the above-described flaps. The flap is mounted on the sidewall to rotate between a closed position suppressing the flow of exhaust gas and an open position allowing the flow of exhaust gas flowing along the at least one sidewall.

The term tubular structure should be understood broadly as referring to any structure which allows a flow path for exhaust gas. It may comprise various cross-sectional geometries (e.g. perpendicular to the flow). For example, the tubular structure may have a circular or ellipsoidal cross-section, a rectangular or any other polygon-shaped cross-section, or any combination thereof. This geometry may also vary along the flow between the mentioned forms. Dependent on the cross-section of the tubular structure also the form of the flap may vary to ensure that the flap closes the flow path of the exhaust gas in the closed position. For example, if the tubular structure comprises a rectangular cross-section, also the flap can comprise a rectangular first arm portion and/or second arm portion. On the other hand, if the tubular structure comprises a circular cross-section, the first arm portion and/or the second arm portion may comprise a curved cross-section perpendicular to the flow of the exhaust gas (like a spoon) to close the circular tubular structure in the closed flap position.

In yet another embodiment the exhaust gas system may comprise a mounting structure for mounting the exhaust gas system to the combustion engine, and/or a turbo charger unit driven by the pressure of the exhaust gas. The flap may be arranged upstream from the turbo charger unit. Therefore, the flap may be attached to the tubular structure at a position between the mounting structure and the turbo charge. Furthermore, the tubular structure can be mounted directly on the turbo charger (for example on a connecting part of the turbo charger or the turbine of the turbo charger).

In yet another embodiment the turbo charger unit may be a variable geometry turbo charger including a turbine, wherein the flap is mounted at a position close to the turbine to control the geometry to which the flow of exhaust gas into the turbine is exposed, thereby enabling a support for the variable geometry turbo charger.

In yet another embodiment the tubular structure may comprise a curve (or curved portion) with an inner curve and an outer curve. The curve can be defined with respect to the flow of the exhaust gas that is guided around the curve by the tubular structure. The sidewall, on which the flap is mounted, may represent the outer curve.

In addition, the tubular structure may comprise a first straight portion and a second straight portion which are formed on both sides of the curved portion. When the flap is arranged at the curved portion of the tubular structure, the first arm portion can be arranged such that the flow coming from the first straight portion hits the first arm portion, thereby applying directly a dynamic pressure on the first arm portion. This pressure can support or balance the force needed to close the flap, which may primarily be done by the second arm portion.

Therefore, in a further embodiment the curve connects a first at least partly straight portion of the tubular structure with a second at least partly straight portion of the tubular structure. In the direction of the flow of exhaust gas, the first arm portion may be curved and part of the outer curve. The second arm portion may be planar and part of the second at least partly straight portion of the tubular structure. As mentioned before, this arrangement provide the advantage that the moving exhaust gas hits one the arm portions and is redirected by this one arm portion, thereby applying an additional dynamical pressure supporting the balancing.

Although the at least partly straight portions may provide the advantage of suppressing turbulences, in further embodiments the first at least partly straight portion and/or the second at least partly straight portion can be any kind of portion directing the exhaust gas, not necessarily straight.

In yet another embodiment the flap is a braking flap configured to brake the vehicle in the closed or partly closed position.

Further embodiments relate also to an exhaust gas system with an exhaust gas recirculation system that is able to guide exhaust gas from an outlet of the combustion engine to an inlet of the combustion engine. In such embodiments, the flap may further be controlled to rotate gradually from the opened position to the closed position, thereby supporting gradually the exhaust gas recirculation. In further embodiments, one or more intermediate positions are defined and the flap can take the different positions subsequently or jump between the different positions. This can be used to gradually increase/decrease the gas pressure at the inlet side of the combustion engine by gradually closing/opening the flap in the exhaust manifold.

In further embodiments the flap does not close completely the tubular structure so that there is still a remaining gas flow passing through the closed flap.

Even if no gas recirculation system is present, the flap may be controlled to take a certain number of discrete angular positions closing the tubular structure only partly. These distinct positions of the flap may also be adapted to support the turbine efficiency, i.e. the gas flow may be directed in a particular direction into the turbine of the turbo charger.

In yet another embodiment the exhaust gas system further comprises a control unit configured to control the position or the rotation of the flap between the open position and the closed position and/or the at least one partly closed position. The control unit may be configured to operate an actuator to move the flap between the various positions (open, close, partly closed, etc.).

### Brief Description of the Drawings

Various embodiments of the present invention will be described in the following by way of examples only, and with respect to the accompanying drawings, in which:
- Fig. 1: depicts a flap according to an embodiment of the present invention;
- Fig. 2: illustrates a torque acting on a balanced and an unbalanced flap;
- Fig. 3: depicts a gas exhaust system with a turbo charges and an engine;
- Fig. 4: depicts a gas exhaust system with an open flap according to another embodiment of the present invention;
- Fig. 5: depicts the gas exhaust system of Fig. 4 with a closed flap; and
- Fig. 6: depicts a conventional flap within a gas exhaust system.

### Detailed Description

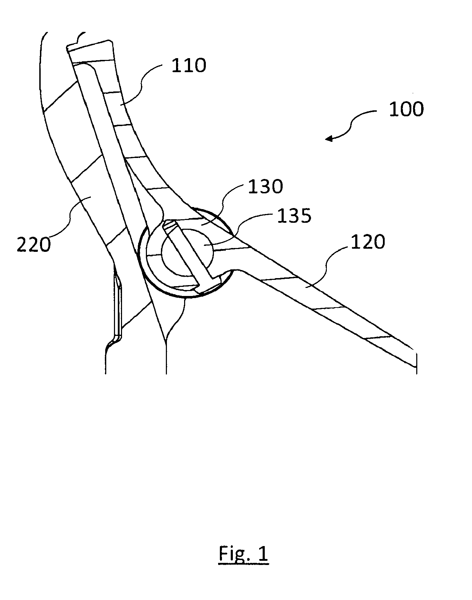

Fig. 1 depicts a flap 100 according to an embodiment of the present invention. The flap 100 is suitable, when arranged in an exhaust gas system of a combustion engine, to provide a valve that can be used to brake a vehicle by controlling a pressure of a flow of exhaust gas. The flap 100 comprises a first arm portion 110, a second arm portion 120, and a support portion 130 arranged between the first arm portion 110 and the second arm portion 120.

The support portion 130 is configured to mount the flap 100 rotatable about a rotational axis 135, wherein the rotational axis 135 is arranged tangentially to the flow of exhaust gas (in a cross-sectional view). For example, the flap 100 as depicted in Fig. 1 is mounted on a sidewall 220 such the rotational axis 135 is a tangent to the side wall.

The first arm portion 110 and/or the second arm portion 120 comprise a geometry to balance a pressure acting on the first arm portion 110 with the pressure acting on the second arm portion 120 to limit a maximal torque acting on the flap 100 about the rotational axis 135.

Therefore, according to present invention the rotational axis 135 about which the flap 100 is rotatable is arranged at an outer sidewall 220 of a tubular structure that guide the exhaust gas such that the exhaust gas flows only on one side of the flap 100. As a result, the gas pressure of the flow 105 acts only on this one side of the flap 100 and the balancing effect of the flap 100 is achieved by the gas pressure acting on both arms 110, 120. Thus, the resulting torque acting on the flap 100 can be limited.

The degree of balancing depends on the pressure acting on the first arm portion 110 and the second arm portion 120 and can be adjusted to a large extent based on the selected geometry of the first arm portion 110 and the second arm portion 120. Since the rotational axis 135 does not extend through the flow path 105, no turbulences will be generated in the gas flow 105 when passing the flap 100. Instead, the flap 100 can be arranged such that the flap 100 forms part of the outer sidewall (for example, an outer curve of the side wall) and will direct the flow 105 of gas around a curve. In particular, it becomes possible that the flap 100 does not modify the cross-sectional area perpendicular to the flow 105 - which would be the case if the flap would be arranged within the flow path of the exhaust gas.

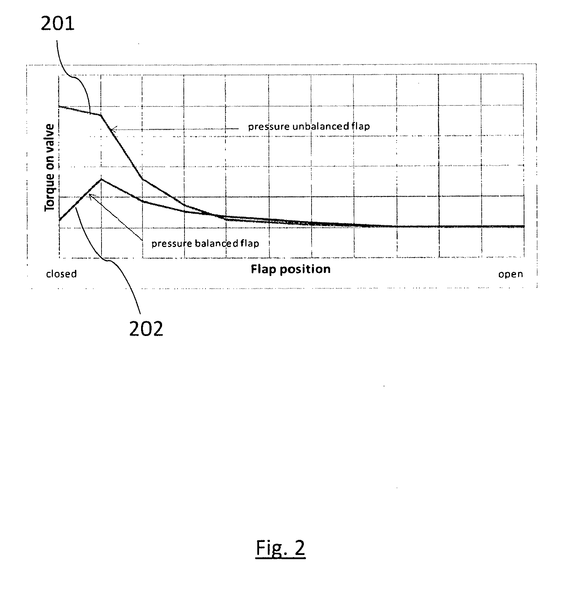

Fig. 2 illustrates the difference between a pressure-balanced flap 100 as, for example, shown in Fig. 1 and a pressure-unbalanced flap 600 as, for example, shown in Fig. 6. Both flaps can be rotated from an open position to a closed position and Fig. 2 shows the torque applied on the flaps depending on the position of the flap when going from the open position on the right-hand side of Fig. 2 to the closed position on the left-hand side.

As it is apparent from Fig. 2 in the open position, no torque is applied to the flap (or almost no torque). The torque slowly increases when going from the open flap position to the closed flap position. For the pressure-unbalanced flap 600 as shown in Fig. 6, the torque (see graph 201) increases monotonically from the open flap position to the closed flap position. The maximum torque is reached at the closed flap position. On the other hand, for the pressure-balanced flap 100 as shown in Fig. 1, the maximum torque is reached at an intermediate position, when going from the open flap position to the closed flap position (see graph 202). Thus, after an initial increase, the torque decreases again before reaching the closed flap position at the end.

Therefore, for an unbalanced flap the system has to withstand a large torque in order to securely keep the flap closed. On the other hand, for the balanced flap the closed flap position is not subject to a large torque applied constantly on the flap. Due to the balancing effect, the pressures acting on both arms of the flap 100 compensate each other. However, the applied torque in the closed flap position may no vanish. Instead, it may be of advantage, if a small torque still remains so that the flap 100 will open itself, if no torque maintaining the closed position is applied to the flap 100. Hence, according to embodiments the geometry of the flap 100 is such that the resulting torque on the flap 100 is higher than the resulting torque in the open position (as illustrate in graph 202).

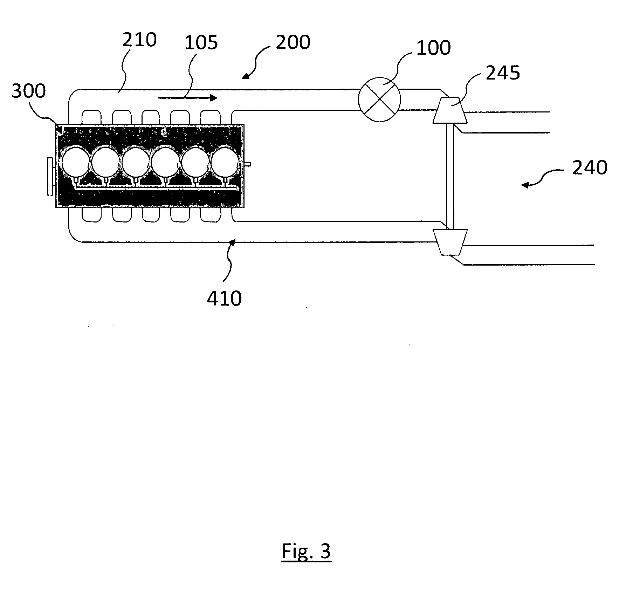

Fig. 3 depicts an exhaust gas system 200 with a tubular structure 210 (exhaust manifold) with a valve that includes the flap 100 and a turbo charge unit 240. The turbo charger unit 240 comprises a turbine 245 arranged downstream of the flap 100 along the flow path 105 of the exhaust gas. The exhaust gas system 200 is attached to an engine 300, which is, for example, a six-cylinder combustion engine. The combustion engine 300 is connected to an intake manifold 410, which supplies fuel to the combustion engine 300. The turbo charger unit 240 is configured to apply a pressure on the fuel in the intake manifold 410 so that the fuel enters the engine 300 with a predetermined pressure.

By using the flap 100 in the depicted exhaust gas system 200 as a valve closing at least part of the exhaust manifold, the pressure at the outlet of the engine 300 increases, thereby providing a braking functionality for the vehicle.

The exhaust gas system 200 may further comprise an exhaust gas recirculation system (not shown in Fig. 3), which is configured to provide at least part of the exhaust gas to the intake manifold. The gas recirculation system may be supported by closing the flap 100 and may control the braking of the exhaust gas braking.

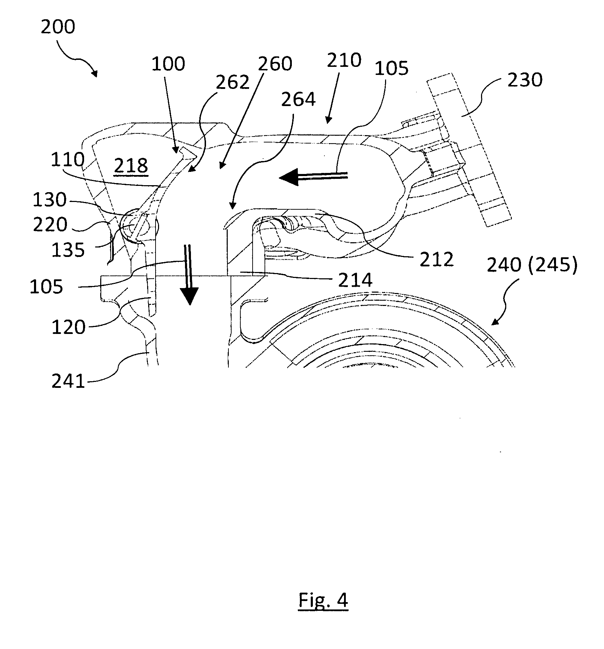

Fig. 4 depicts an embodiment for the exhaust gas system 200. The exhaust gas system 200 comprises the tubular structure 210, a flap 100 and a turbo charger unit 240.

The tubular structure 210 guides a flow 105 of exhaust gas from an engine (not shown) and includes a mounting structure 230, a first partly straight portion 212, a curved portion (or a curve) 260, and a second at least partly straight portion 214. The mounting structure 230 is configured to mount the tubular structure 210 to the engine or cylinder head (not shown). The first partly straight portion 212 is arranged downstream of the flow 105 coming from the mounting structure 230. The curved portion 260 is arranged between the first partly straight portion 212 and the second at least partly straight portion 214. The second at least partly straight portion 214 is attached to a connecting portion 241 of the turbo charger unit 240. The turbo charger 240 (which is only partly shown in Fig. 4) may comprise a turbine 245 driven by the pressure of the exhaust gas.

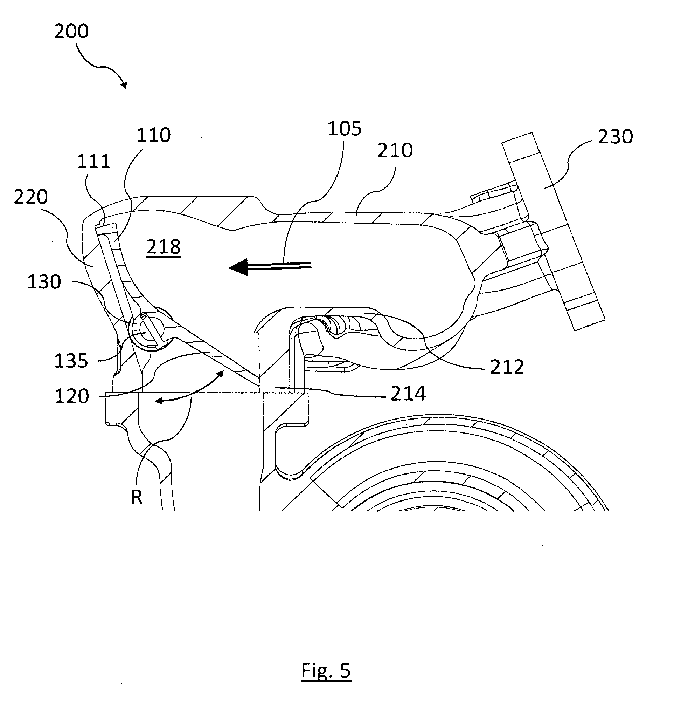

Furthermore, exhaust ports connecting cylinders of the combustion engine 300 are not shown in Figs. 4 and 5 and are arranged along a direction perpendicular to the drawing plane.

At the curved portion 260 the flap 100 is secured to a sidewall 220 of the tubular structure 210. The curved portion 260 comprises an outer curve 262 and an inner curve 264, which are defined with respect to the flow 105 of exhaust gas flowing around the curve 260. In the embodiment as shown in Fig. 4, the flap 100 is attached to the sidewall 220 of the outer curve 262 (opposite to the inner curve 264).

The flap 100 is rotatable about a rotational axis 135 which is perpendicular to the direction of the flow 105 and which is mounted on the sidewall 220 (i.e. the rotational axis 135 is also tangential to the sidewall 220). Within the sidewall 220 a cavity or recess 218 may be formed that accommodates the first arm portion 110 of the flap 100 after rotating the flap 100 into the closed position. The rotatable flap 100 inside the tubular structure 210 defines thus a valve that can be closed or partly closed upon rotation of the flap 100. Fig. 5 depicts the same exhaust gas system 200 as shown in Fig. 4. However, in Fig. 5 the flap 100 is in the closed position. When the flap 100 performs a rotational movement R from the open position (shown in Fig. 4) to the closed position (shown in Fig. 5), the second arm portion 120 closes the flow path for the flow 105 and the first arm portion 110 moves into the recess 218 arranged at the curved portion 260 of the tubular structure 210. In the closed position the first arm portion 110 may abut on the sidewall 220 on which the support portion 130 is rotatably mounted. The first arm portion 110 may comprise an abutment portion 111, which abuts with the sidewall 220 in the closed position and may act as a spacer to provide a clearance between the first arm portion 110 and the sidewall 220. At the same time the second arm portion 120 closes (completely or partly) the flow path for the flow 105. As a result the pressure in the upstream part of the tubular structure 210 will increase providing the braking functionality.

When comparing Figs. 4 und 5, it is apparent that the pressure balancing is achieved by using the flap 100 with two arm portions 110, 120 that are both subject to the pressure of the flow 105. The embodiment as shown in Figs. 4 and 5 is, in particular, advantageous because the first arm portion 110 is arranged directly at the curved portion 260. This has the effect that the straight flow 105 hits directly the first arm portion 110 and, especially for the stage of closing the flap where the flow 105 has still significant kinetic energy, this arrangement will enhance the balancing effect. Therefore, the pressure acting on the first arm portion balances effectively the torque needed to move the second arm portion 120 to close the flow path.

The exhaust gas system 200 may further comprise an exhaust gas recirculation system which is arranged in a direction perpendicular to the drawing plane and is not shown in the cross-sectional views of Figs. 4 and 5. The exhaust gas recirculation system is configured to direct exhaust gas to the intake manifold 410 (see Fig. 3) when the flap 100 moves from the open position (shown in Fig. 4) to the closed position (shown in Fig. 5). The present invention provides the advantage to support such an exhaust gas recirculation system, because the pressure-balanced flap 100 can be accurately controlled in the process of closing or partly closing the flap 100. As a result, the flap 100 can easily be closed gradually to provide an gradually increase of the pressure at the outlet of the combustion engine 300 which supports the exhaust gas recirculation towards the intake manifold of the combustion engine 300.

A further advantage of the flap 100 as shown in Figs. 4 and 5 relates to the varying geometry to which the flow 105 is exposed during closing the flap 100. If, for example, the turbo charger unit 240 is a variable geometry turbo charger the geometry, for example of the cross-section of the flow (perpendicular to the flow direction), will be modified dependent on the operation condition of the engine. This variation of the geometry may be further supported by the flap 100 according to embodiments of the present invention. For example, the flow 105 can be directed in a predetermined direction by partly rotating the flap 100 and can be aligned with a flow direction, e.g., imposed by vanes in the turbine 245 thus supporting the efficiency of the turbine 245.

In embodiments the exhaust gas system 200 comprises a control unit, which is not shown in the figures. The control unit may be configured to control an actuator that rotates the flap 100 between the open position, the closed position and at least one partly closed position. There may be various partly closed positions, which close the flap (or valve) only up to a certain percentage (e.g. close the valve to 10%, 20%, 50%, 70%, 90% or any other amount). The control unit may also be configured to control the actuator rotating the flap 100 in a continuous way or stepwise between the various positions (open, close, partly closed, etc.).

Advantageous aspects of the various embodiments can be summarized as follows:

The invention can be characterized by an appropriate shape of the exhaust flap 100 and the flow 105 of the exhaust gas at an opened position of the valve. This involves the following advantages: At an open valve position the ordinary flow is optimized. An undisturbed flow ensures the maximum efficiency the turbo charging process due to its low-pressure drop. The pressure-balanced flap 100 enhances the performance of the exhaust brake actuator. An actuator size can be reduced to achieve better response time and to increase the positioning accuracy of the valve ensuring the optimal performance of both the EGR and exhaust brake. The pressure-balanced valve reduces a torque generated by the fluid flow at a partly opened or closed flap 100.

Examples of pressure-balanced and -unbalanced exhaust brake flap designs were shown in Fig. 4/5 and 6 respectively. The pressure-unbalanced flap 600 has continuously increasing characteristic of the torque during the process of closing of valve. The pressure-balanced flap 100 has a torque decreasing partly at the closed position of the flap 100 (see the fig 2.)

The pressure-balanced valve or valves are positioned upstream to the turbo charger turbine 245 (see Fig. 3). The pressure-balanced valve 100 is characterized by reducing the generated torque at the partly open and fully closed valve position (compared to the unbalanced flap 600). The pressure-balance is achieved by to effective arms of the flap 100 with similar surface cross sections, while the unbalanced flap 600 has only one arm, or significantly different arm cross-sections.

In further embodiments, minimum or zero disturbances of the flow at the opened position is achieved. For example, at the open position at least one flap/arm can be part of the wall 220 of the fluid flow concerning the valve body in the turbine upstream position ensuring low disturbance of the flow and resulting in a low pressure drop (see fig 4).

In further advantageous realizations, the pressure-balanced valve has an exhaust-braking functionality and/or the pressure-balanced valve has an EGR supporting function. Moreover, the pressure-balanced flap 100 may have a pressure limiting function by the remaining opening torque at closed valve position. A turbine supporting functionality may be achieved by controlling or guiding the flow 105 with the pressure balanced-valve like VGT (variable geometry turbo charger).

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 100, 600: flap
- 105: flow of exhaust gas
- 110: first arm portion
- 120: second arm portion
- 130, 604: support portion
- 135, 605: rotational axis
- 210, 610: tubular structure
- 212, 612: first at least partly straight portion
- 214, 614: second at least partly straight portion
- 218: recess
- 220: sidewall
- 230: mounting structure
- 240: turbo charger unit
- 241: connecting part
- 245: turbine
- 260, 660: curve
- 262, 662: outer curve
- 264, 664: inner curve
- 300: combustion engine
- 410: intake manifold
- R: rotary movement

## Claims

1. A flap (100) for braking a vehicle by controlling a pressure of a flow (105) of exhaust gas from a combustion engine (300), the flap (100) comprising:
a first arm portion (110);
a second arm portion (120); and
a support portion (130) arranged between the first arm portion (110) and the second arm portion (120), wherein the support portion (130) is configured to mount the flap (100) rotatable about a rotational axis (135) being tangential in a cross-sectional view of the flow (105) of exhaust gas,
wherein the first arm portion (110) and the second arm portion (120) comprise a geometry to balance a pressure acting on the first arm portion (110) with the pressure acting on the second arm portion (120) to limit a maximal torque acting on the flap (100) about the rotational axis (135).

2. The flap (100) according to claim 1, wherein the first arm portion (110) and/or the second arm portion (120) comprise(s) a curved surface in a direction of the flow (105) to reduce turbulences in the flow (105) of exhaust gas.

3. The flap (100) according to claim 1 or claim 2, wherein the first arm portion (110) and/or the second arm portion (120) are arranged such that the first arm portion (110) and/or the second arm portion (120) are part of a wall guiding the flow (105) of exhaust gas.

4. The flap (100) according to one of the preceding claims, wherein the first arm portion (110) and/or the second arm portion (120) comprise(s) a geometry enabling a nonzero opening torque acting on the flap (100) in a closed position.

5. An exhaust gas system (200) for a combustion engine (300) of a vehicle, comprising:
a tubular structure (210) with a side wall (220) to guide the exhaust gas from the combustion engine (300); and
a flap (100) according to one of the preceding claims, which is mounted on the side wall (220) to rotate between a closed position suppressing the flow (105) of exhaust gas and an open position allowing the flow (105) of exhaust gas flowing along the side wall (220).

6. The exhaust gas system (200) according to claim 5 further comprising
a mounting structure (230) for mounting the exhaust gas system (200) to the combustion engine (300); and
a turbo charger unit (240) driven by a pressure of the flow (105) of exhaust gas,
wherein the flap (100) is arranged upstream from the turbo charger unit (240).

7. The exhaust gas system (200) according to claim 6, the turbo charger unit (240) being an variable geometry turbo charger with a turbine (245), wherein the flap (100) is mounted at a position close to the turbine (245) to control the geometry to which the flow (105) of exhaust gas into the turbine (245) is exposed, thereby enabling a support for the variable geometry turbo charger.

8. The exhaust gas system (200) according to one of claims 5 to 7, the tubular structure (210) comprising a curve (260) with an outer curve (262) and an inner curve (264) with respect to the flow (105) of the exhaust gas that is guided around the curve (260) by the tubular structure (210), wherein the side wall (220) on which the flap (100) is mounted represents the outer curve (262).

9. The exhaust gas system (200) according claim 8, wherein the curve connects a first at least partly straight portion (212) of the tubular structure (210) with a second at least partly straight portion (214) of the tubular structure (210), and wherein, in the direction of the flow (105) of exhaust gas, the first arm portion (110) is curved and is part of the outer curve (262) and the second arm portion (120) is planar and is part of the second at least partly straight portion (214) of the tubular structure (210).

10. The exhaust gas system (200) according to one of claims 5 to 9, wherein the flap (100) is a braking flap (100) configured to brake the vehicle in the closed position.

11. The exhaust gas system (200) according to one of claims 5 to 10, further comprising:
an exhaust gas recirculation system being able to direct exhaust gas from an outlet of the combustion engine (300) to an inlet of the combustion engine (300),
wherein the flap (100) is controllable to rotate gradually from the opened position to the closed position, thereby supporting gradually the exhaust gas recirculation.

12. The exhaust gas system (200) according to one of claims 5 to 11, further comprising a control unit configured to control a rotation of the flap (100) between the open position and the closed position and at least one partly closed position.
